# FASCICULE DE BREVET EUROPEEN

(11) **EP 1 995 224 B1**
(45) Date de publication et mention de la délivrance du brevet: **28.04.2010**
(21) Numéro de dépôt: 07290503.7
(22) Date de dépôt: 24.04.2007
(51) Int. Cl.: C04B 24/08, C04B 24/32, C04B 28/02, C04B 40/06

(54) **Beton leger prêt à l'emploi et procédé d'obtention**
Fertigleichtbeton und Herstellungsverfahren
Ready-to-use lightweight concrete and method of obtaining same

(43) Date de publication de la demande: 26.11.2008
(73) Titulaire: Fibrasa Holding S.A., 6430 Schwyz (CH)
(72) Inventeur: Wicki, Maximilian, 4500 Soleure (CH)
(74) Mandataire: Hirsch & Associés

(56) Documents cités:
- EP-A- 0 457 634
- EP-A- 1 686 103
- EP-A1- 1 160 219
- WO-A-98/07667
- ANONYME: "Tylovis EP 28" SE TYLOSE DATENBLÄTTER, [Online] 21 novembre 2005 (2005-11-21), XP002456174 Extrait de l'Internet: URL:http://www.setylose.de/z_tds/TDS_d/TDS _Tylovis_EP_28_TDS_B_d.pdf> [extrait le 2007-10-25]

## Description

### DOMAINE DE L'INVENTION

La présente invention concerne un béton léger prêt à l'emploi, ainsi qu'un procédé de préparation de ce béton prêt à l'emploi.

### ARRIERE-PLAN TECHNIOUE

On connaît l'utilisation dans la fabrication des bétons allégés de granulats légers, tels que schistes et argiles expansés, ponces, pouzzolanes, perlites, vermiculites, polystyrènes expansés, copeaux de bois et liège.

De tels granulats, de densité à peu près égale à 0,1, sont de préférence précalibrés, par élimination de la fraction fine, par exemple inférieure à 1,4 mm de diamètre, pour éviter l'adsorption d'une trop grande quantité d'adjuvants, ce qui serait préjudiciable aux caractéristiques souhaitables du matériau.

Le document EP 0457634 décrit de tels granulats légers enrobés d'un mélange d'adjuvants, à savoir un agent tensioactif, un accélérateur de prise des ciments et un agent fluidifiant. Ces granulats légers sont destinés à être gâchés avec du ciment et de l'eau.

Le document EP1160219 décrit une composition aqueuse de ciment qui comprend des agrégats minces et bruts (densité 2,60 kg/l), du ciment, d'un additif pour ciment préférablement une combinaison d'un oxyde d'éthylène et d'un oxyde propylène en bloc et de l'eau.

Le document EP0457634 décrit de tels granulats légers (vermiculite, densité apparente 0,06 kg/l, granulométrie 1,4 à 6 mm) enrobés d'un mélange d'adjuvants, à savoir un agent tensioactif, un accélérateur de prise des ciments et un agent fluidifiant. Ces granulats légers sont destinés à être gâchés avec du ciment et de l'eau.

Toutefois, il existe encore un besoin pour un système de béton léger prêt à l'emploi qui puisse être utilisé avec une moindre quantité d'eau, qui présente une meilleure plasticité et de meilleures caractéristiques mécaniques.

### RESUME DE L'INVENTION

L'invention a en premier lieu pour objet une composition sèche comprenant:
- des granulats de densité comprise entre 0,08 kg/L et 0,12 kg/L et de Dₘₐₓ inférieur ou égal à 6 mm ;
- du ciment ; et
- un copolymère bloc de poly(oxyde d'Ethylène) et de poly(oxyde de propylène).

Selon un mode de réalisation, les granulats sont choisis dans le groupe comprenant les schistes et argiles expansés, ponces, pouzzolanes, perlites et vermiculite, polystyrènes expansés, copeaux de bois et lièges.

Selon un mode de réalisation, les granulats sont de la perlite expansée.

Selon un mode de réalisation, le ciment est un ciment de type CEM 32.5 N ou R.

Selon un mode de réalisation :
- le rapport de la masse de ciment sur la masse de granulats est compris entre 0,9 et 1,2, de préférence entre 1 et 1,1 ; et
- le rapport de la masse de copolymère bloc de poly(oxyde d'Ethylène) et de poly(oxyde de propylène) sur la masse de granulats est compris entre 0,5×10⁻³ et 4×10⁻³, de préférence entre 1,5×10⁻³ et 2×10⁻³.

Selon un mode de réalisation, la composition sèche comprend en outre :
- du sable ;
- un agent tensioactif ; et
- un agent anti-ségrégateur.

Selon un mode de réalisation, le sable est un sable roulé constitué de grains de taille comprise entre 0 et 4 mm.

Selon un mode de réalisation, l'agent tensioactif est un polynaphtalène sulfonate de sodium.

Selon un mode de réalisation, l'agent anti-ségrégateur est la méthylhydroxypropylcellulose.

Selon un mode de réalisation :
- le rapport de la masse de ciment sur la masse de granulats est compris entre 4,5 et 7, de préférence entre 5,4 et 6 ;
- le rapport de la masse de sable sur la masse de granulats est compris entre 2 et 5, de préférence entre 3 et 4 ;
- le rapport de la masse d'agent tensioactif sur la masse de granulats est compris entre 5×10⁻³ et 25×10⁻³, de préférence entre 8×10⁻³ et 16×10⁻³;
- le rapport de la masse de copolymère bloc de poly(oxyde d'Ethylène) et de poly(oxyde de propylène) sur la masse de granulats est compris entre 3×10⁻³ et 10×10⁻³, de préférence entre 4,5×10⁻³ et 6,5×10⁻³ ; et
- le rapport de la masse d'agent anti-ségrégateur sur la masse de granulats est compris entre 0,2×10⁻³ et 2×10⁻³, de préférence entre 0,5×10⁻³ et 1×10⁻³.

L'invention a également pour objet une composition de béton humide, comprenant :
- la composition sèche susmentionnée ; gâchée avec
- de l'eau.

L'invention a également pour objet l'utilisation de la composition sèche susmentionnée ou de la composition de béton humide susmentionnée pour la rénovation de plancher ou la fabrication de sous-chape.

L'invention a également pour objet un procédé de fabrication d'une composition sèche comprenant :
- des granulats de densité comprise entre 0,08 kg/L et 0,12 kg/L et de Dₘₐₓ inférieur ou égal à 6 mm ;
- du ciment ; et
- un copolymère bloc de poly(oxyde d'Ethylène) et de poly(oxyde de propylène) ;
dans lequel le procédé comprend une étape de mélange des composants de la composition sèche.

Selon un mode de réalisation, la composition sèche est telle que décrite ci-dessus.

Selon un mode de réalisation, l'étape de mélange est effectuée au moyen d'un mélangeur comprenant :
- une cuve de mélange en forme de cône à axe vertical ;
- un dispositif permettant de réaliser une rotation de la cuve ;
- une vis de mélange tangente au cône et fixée sur un châssis fixe permettant d'effectuer le mélange ;
- une vis de mélange à coeur permettant d'optimiser ce mélange.

Selon un mode de réalisation, on introduit dans le mélangeur, dans l'ordre :
- les granulats ; puis
- le ciment ; puis
- éventuellement le sable ; puis
- les autres composés.

La présente invention permet de surmonter les inconvénients de l'état de la technique. Elle fournit plus particulièrement une composition sèche qui constitue un béton léger prêt à l'emploi, c'est-à-dire que l'on gâche simplement avec de l'eau avant utilisation.

Ceci est accompli grâce à la mise au point de granulats légers (en particulier des grains de perlite expansée) mélangés et de préférence enrobés avec du ciment et un copolymère bloc de poly(oxyde d'Ethylène) et de poly(oxyde de propylène), et éventuellement avec d'autres adjuvants, pour une action synergique.

Les granulats utilisés dans la présente invention présentent une porosité élevée par rapport aux agrégats traditionnels lourds. Or, une porosité importante entraîne des propriétés indésirables pour la confection d'un béton léger compact et résistant mécaniquement. En effet, une forte porosité confère à l'agrégat léger une forte capacité d'adsorption d'eau nécessitant l'utilisation de quantités importantes d'eau pour hydrater correctement le ciment et pour obtenir une bonne maniabilité du béton. L'emploi de quantités importantes d'eau de gâchage entraîne à son tour d'autres inconvénients, tels qu'un abaissement des caractéristiques mécaniques, augmentation du temps de prise et de séchage du béton, maniabilité médiocre du béton et risque de ségrégation du ciment.

Le mélange et l'enrobage des granulats avec plusieurs adjuvants agissant de façon synergique permet l'obtention de granulats légers présentant une capacité d'allégement des bétons non porteurs supérieurs, et dont l'emploi par mètre cube de béton est réduit, ce qui permet donc une augmentation de la quantité de ciment utilisée, sans que varie la densité du béton durci, et une amélioration de la maniabilité du béton frais pour un rapport inférieur : eau de gâchage / ciment.

De plus, le ciment étant déjà inclus dans la composition sèche selon l'invention, pour partie au moins dans l'enrobage des granulats, il suffit de mélanger la composition sèche avec de l'eau pour préparer le béton léger.

### BREVE DESCRIPTION DES FIGURES

La **figure 1** représente un exemple de ligne de production permettant de préparer la composition sèche selon l'invention.

La **figure 2** représente un exemple de mélangeur susceptible d'être utilisé dans le cadre du procédé selon l'invention.

### DESCRIPTION DE MODES DE REALISATION DE L'INVENTION

L'invention est maintenant décrite plus en détails et de façon non limitative dans la description qui suit.

### Premier type de composition sèche

Selon un premier mode de réalisation, la composition sèche selon l'invention comprend de la perlite expansée, du ciment et un adjuvant solide qui est un acide gras, en tant qu'agent fluidifiant des ciments.

Le ciment et l'agent fluidifiant sont de préférence présents au moins partiellement sous forme d'un enrobage de la perlite expansée.

La perlite expansée présente une densité comprise entre 0,08 kg/L et 0,12 kg/L et un Dₘₐₓ inférieur à 6 mm. Le Dₘₐₓ correspond à la taille du grain de perlite expansée de taille maximale dans le mélange. Tous les grains de perlite ont donc une taille inférieure ou égale au Dₘₐₓ. Dans la présente description, la « taille » d'un grain désigne la dimension du grain telle que déterminée par tamisage. Dans le cas de grains de forme approximativement sphérique, la taille correspond approximativement au diamètre.

De préférence le Dₘₐₓ est inférieur à 5,6 mm, voire inférieur à 5,4 mm.

De préférence la densité est comprise entre 0,09 kg/L et 0,11 kg/L, et de manière plus particulièrement préférée est voisine de 0,1 kg/L.

Il est possible de remplacer la perlite expansée par un autre type de granulat léger équivalent, présentant les mêmes propriétés de densité et de granulométrie. On peut ainsi utiliser de manière générale des grains de schiste expansé ou argile expansée, de ponce, de pouzzolane, de vermiculite expansée, de polystyrène expansé ou des copeaux de bois et lièges ou des mélanges de ces matériaux.

Le copolymère bloc de poly(oxyde d'éthylène) et de poly(oxyde de propylène) a la formule suivante:

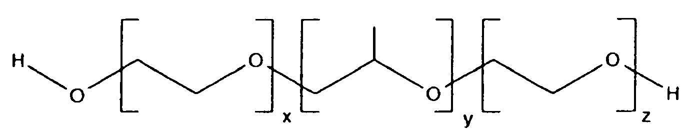

Dans cette formule, x, y et z sont des nombres entiers où x et z sont égaux et y est plus petit que x et z. Le poids de la molécule finale est de préférence compris entre 10000 et 15000 g/mol. Le poids moléculaire de l'oxyde d'éthylène est 44 g/mol, celui de l'oxyde de propylène est 58 g/mol. Par exemple si x=100, y=90, z=100, le poids de la molécule est de 100×44 + 90×58 + 100×44 = 14020 g/mol. Pour prendre un autre exemple, si x=90, y=60, z=90 , le poids de la molécule est de 90×44 + 60×58 + 90×44 = 11400 g/mol.

La viscosité des solutions aqueuses des lots ayant un poids de molécule de 15000 g/mol sera plus élevée que celle des lots ayant un poids de molécule de 10000 g/mol.

La fonction essentielle de cet agent est d'améliorer la plasticité et les caractéristiques mécaniques du béton tout en réduisant la quantité d'eau de gâchage.

Le ciment peut être de tout type usuel et est de préférence un ciment Portland, et de préférence un ciment de type CEM 32.5 N ou R.

De préférence, la masse de ciment est dans un rapport compris entre 0,9 et 1,2, de préférence entre 1 et 1,1, par rapport à la masse de granulats.

De préférence, la masse de copolymère bloc de poly(oxyde d'Ethylène) et de poly(oxyde de propylène) est dans un rapport compris entre 0,5×10⁻³ et 4×10⁻³, de préférence entre 1,5×10⁻³ et 2×10⁻³, par rapport à la masse de granulats.

Ce premier type de composition sèche est particulièrement utile pour fournir un béton léger adapté à la rénovation de sous-chapes. Pour ce faire, la composition sèche est gâchée avec de l'eau, avec un rapport eau / ciment qui est de préférence comprise entre 0,25 et 0,65, plus particulièrement entre 0,35 et 0,55, et qui est par exemple environ égal à 0,43.

### Deuxième type de composition sèche

Selon un deuxième mode de réalisation, la composition sèche selon l'invention comprend, outre les ingrédients susmentionnés (perlite ou équivalent, ciment et agent fluidifiant), les composés supplémentaires suivants : du sable, un agent tensioactif et un agent anti-ségrégateur.

Le sable est constitué par des grains de taille granulométrique comprise de préférence entre 0 et 4 mm (passant de tamis à 4 mm). Il peut être de toute nature : minérale, calcaire, siliceuse, silico-calcaire ou autre. Il présente une densité supérieure à celle des granulats décrits ci-dessus. De préférence le sable est un sable roulé de rivière et n'est pas un sable broyé. Ceci permet un meilleur enrobage des granulats.

L'agent tensioactif et l'agent anti-ségrégateur sont de préférence présents avec le ciment et l'agent fluidifiant, au moins partiellement, sous forme d'un enrobage de la perlite expansée ou équivalent.

La perlite expansée ou équivalent, le ciment et l'agent fluidifiant sont de préférence tels que décrits ci-dessus en relation avec le premier type de composition sèche selon l'invention.

De préférence l'agent tensioactif est le polynaphtalène sulfonate de sodium. Il peut également, et non limitativement, consister en au moins l'un des agents de la liste suivante, ou en un mélange de ceux-ci :
- abiétate de sodium ;
- sels d'éthanolamine ou de triéthanolamine ;
- sulfonate d'alcool gras ;
- alkylarylsulfonates ;
- savons sodiques d'acides polyhydroxycarboxyliques ;
- savons alcalins d'acides gras naturels à chaîne carbonée de C₁₂ à C₁₈;
- dérivés tensioactifs de nature protéique à base de sang animal.

L'agent tensioactif provoque un dégagement d'air au moment du malaxage du béton et contribue d'une part à l'allégement du béton, et d'autre part améliore considérablement la maniabilité du béton. La quantité d'air est contrôlée à la fois par la quantité d'eau de gâchage et par un temps de malaxage déterminé.

De préférence, l'anti-ségrégateur est la méthylhydroxypropylcellulose. Ce produit permet de retenir l'eau dans le mélange et empêche la ségrégation du produit lors de la mise en oeuvre. Il peut toutefois retarder ou empêcher la prise des ciments s'il est introduit en trop grande quantité. Tout autre produit connu susceptible d'empêcher la ségrégation lors de la mise en oeuvre du béton et la rétention d'eau peut être utilisé.

De préférence, la masse de ciment est dans un rapport compris entre 4,5 et 7, de préférence entre 5,4 et 6 par rapport à la masse de granulats.

De préférence, la masse de sable est dans un rapport compris entre 2 et 5, de préférence entre 3 et 4 par rapport à la masse de granulats.

De préférence, la masse d'agent tensioactif est dans un rapport compris entre 5×10⁻³ et 25×10⁻³, de préférence entre 8×10⁻³ et 16×10⁻³ par rapport à la masse de granulats.

De préférence, la masse de copolymère bloc de poly(oxyde d'Ethylène) et de poly(oxyde de propylène) est dans un rapport compris entre 3×10⁻³ et 10×10⁻³, de préférence entre 4,5×10⁻³ et 6,5×10⁻³ par rapport à la masse de granulats.

De préférence, la masse d'agent anti-ségrégateur est dans un rapport compris entre 0,2×10⁻³ et 2×10⁻³, de préférence entre 0,5×10⁻³ et 1×10⁻³ par rapport à la masse de granulats.

Ce deuxième type de composition sèche est particulièrement utile pour fournir un béton léger adapté à la rénovation de planchers. Pour ce faire, la composition sèche est gâchée avec de l'eau, avec un rapport eau / ciment qui est de préférence comprise entre 0,5 et 0,9, plus particulièrement entre 0,6 et 0,8, et qui est par exemple environ égal à 0,73.

### Procédé de préparation de la composition sèche

La composition sèche selon l'invention est préparée par mélange des composés secs pré-cités dans un malaxeur ou mélangeur.

On mélange au préalable la perlite, le ciment et éventuellement le sable dans le malaxeur. Ces trois ingrédients sont ajoutés les uns après les autres jusqu'à l'obtention du poids prédéfini pour chacun d'entre eux (l'ajout de ciment n'est possible que si le poids de perlite est atteint, il en est de même pour le sable).

Puis, on ajoute le ou les adjuvants dans le mélange, éventuellement manuellement, et éventuellement le mélangeur étant à l'arrêt. Le mélangeur ne reprend alors son cycle que si le poids des adjuvants est atteint.

Pour la préparation du premier type de composition sèche, on utilise de préférence de 0,2 à 0,5, plus particulièrement de 0,3 à 0,4, et idéalement environ 0,34 volume de copolymère bloc de poly(oxyde d'Ethylène) et de poly(oxyde de propylène) pour le traitement de 1000 volumes de mélange perlite / ciment.

Pour la préparation du deuxième type de composition sèche, on utilise :
- de préférence de 1 à 1,8, plus particulièrement de 1,2 à 1,6, et idéalement environ 1,4 volume d'agent tensioactif pour le traitement de 1000 volumes de mélange perlite / ciment / sable ;
- de préférence de 0,5 à 0,8, plus particulièrement de 0,6 à 0,7, et idéalement environ 0,64 volume de copolymère bloc de poly(oxyde d'Ethylène) et de poly(oxyde de propylène) pour le traitement de 1000 volumes de mélange perlite / ciment / sable ; et
- de préférence de 0,05 à 0,15, plus particulièrement de 0,08 à 0,12, et idéalement environ 0,1 volume d'agent anti-ségrégateur pour le traitement de 1000 volumes de mélange perlite / ciment / sable.

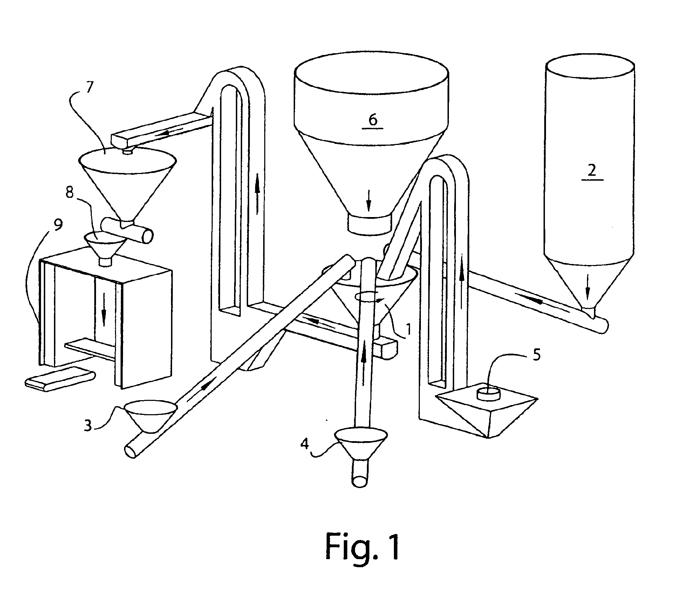

Selon un mode de réalisation préféré, le procédé de préparation de la composition sèche est mis en oeuvre dans une ligne de production telle que représentée à la **figure 1****.**

Cette ligne de production comprend un mélangeur 1, des moyens d'alimentation en ciment 2, éventuellement des moyens d'alimentation en sable 3, des moyens d'alimentation en adjuvants 4, des moyens d'alimentation en perlite 5. Eventuellement, des moyens d'alimentation en vermiculite 6 sont prévus si la vermiculite remplace la perlite dans la composition produite. En sortie du mélangeur 1 est prévu un silo tampon 7, qui alimente à son tour des moyens de pesage 8 (de type peson) et, en aval de ceux-ci, des moyens d'ensachage 9.

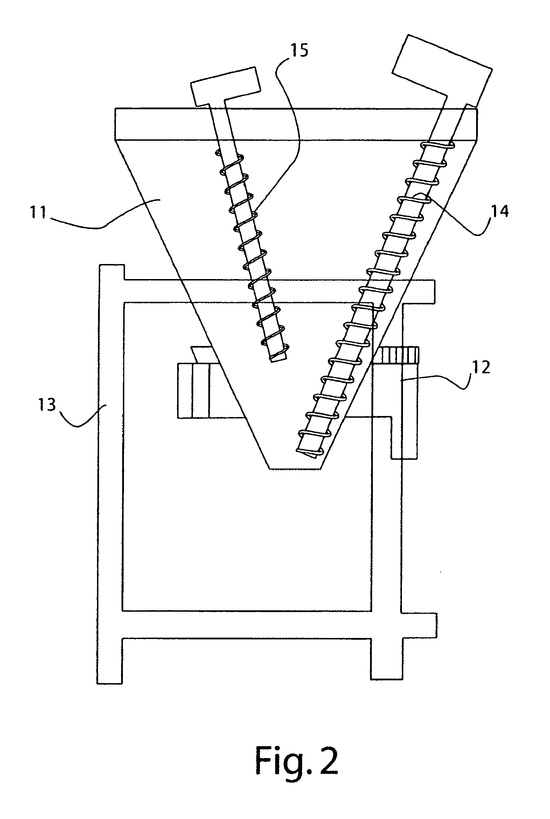

Selon un mode de réalisation préféré, le mélangeur 1 est un mélangeur à cuve tournante. On pourra à cet égard se reporter au document EP0737507, qui décrit des mélangeurs à cuve tournante susceptibles d'être utilisés dans l'invention. Par exemple, en faisant référence à la **Figure 2****,** le mélangeur peut comprendre un cône à axe vertical 11 équipé, en partie centrale, d'une couronne à billes 12 (roulement de gros diamètre), permettant de réaliser une rotation de la cuve à vitesse lente. Une vis de mélange tangente au cône 14 et fixée sur un châssis fixe 13 permet d'effectuer le mélange ; une vis de mélange à coeur 15 permet d'optimiser ce mélange. Les mouvements conjugués permettent d'obtenir un déplacement tridimensionnel du produit. Le mouvement des vis est de type orbital.

### EXEMPLES

Les exemples suivants illustrent l'invention sans la limiter.

### Exemple 1 - préparation d'une composition sèche du premier type

On utilise de la perlite expansée présentant les caractéristiques suivantes :
- Masse Volumique Apparente 105 ± 15 kg / m³
- Granulométrie 5,6 mm maxi

On mélange au préalable la perlite avec le ciment dans le mélangeur. Ces deux composés sont ajoutés l'un après l'autre jusqu'à l'obtention du poids prédéfini pour chacun d'entre eux (l'ajout de ciment n'est possible que si le poids de perlite est atteint).

Le mélangeur s'arrête afin que l'adjuvant soit ajouté manuellement dans le mélange. Le mélangeur ne reprend son cycle que si le poids de l'adjuvant est atteint.

Il reprend alors son cycle afin d'homogénéiser le mélange et ce pendant trois minutes.

Le mélange est ensuite envoyé dans la trémie surmontant l'ensacheuse afin que celui-ci soit mis en sacs.

L'adjuvant est mélangé à 70 kg de perlite et à 75 kg de ciment dans la quantité suivante :
- Agent fluidifiant (copolymère bloc de poly(oxyde d'Ethylène) et de poly(oxyde de propylène)) 125 g

La perlite est commercialisée sous la référence P40 par la société Efisol. Le ciment est de type CEM 32.5 N/R. Le copolymère bloc de poly(oxyde d'Ethylène) et de poly(oxyde de propylène) est commercialisé sous la référence Tylovis EP 28 par SE Tylose GmbH & Co.HG.

### Exemple 2 - préparation d'une composition sèche du deuxième type

On utilise de la perlite expansée présentant les caractéristiques suivantes :
- Masse Volumique Apparente 105 ± 15 kg / m³
- Granulométrie 5,6 mm maxi

On mélange au préalable la perlite, le ciment et le sable dans le mélangeur. Ces trois composés sont ajoutés les uns après les autres jusqu'à l'obtention du poids prédéfini pour chacun d'entre eux (l'ajout de ciment n'est possible que si le poids de perlite est atteint, il en est de même pour le sable).

Le mélangeur s'arrête afin que les trois adjuvants soient ajoutés manuellement dans le mélange. Le mélangeur ne reprend son cycle que si le poids des adjuvants est atteint.

Il reprend alors son cycle afin d'homogénéiser le mélange et ce pendant trois minutes. Le mélange est ensuite envoyé dans la trémie surmontant l'ensacheuse afin que celui-ci soit mis en sacs.

Les trois adjuvants sont mélangés à 65 kg de perlite, 370 kg de ciment et 225 kg de sable dans les quantités suivantes :
- Agent tensio-actif 750 g
- Agent fluidifiant (copolymère bloc de poly(oxyde d'Ethylène) et de poly(oxyde de propylène)) 350 g
- Agent anti-ségrégateur (méthylhydroxypropylcellulose ) 40 g

La perlite, le ciment et le copolymère bloc de poly(oxyde d'Ethylène) et de poly(oxyde de propylène) sont tels que décrits dans l'exemple 1. L'agent tensioactif est commercialisé sous la référence Galoryl PA 320 par CFPI. Ce produit est un polynaphtalène sulfonate de sodium. L'agent anti-ségrégateur est commercialisé sous la référence Culminal MHPC/DC par Hercules International Ltd.

### Exemple 3 - préparation de bétons légers

Les compositions des exemples 1 et 2 sont des compositions de béton prêt à l'emploi, qui sont simplement gâchées avec de l'eau pour préparer des bétons légers présentant les performances présentées dans le tableau 1 ci-dessous.

**Tableau 1 - performance des bétons légers préparés à partir des compositions des exemples 1 et 2**

| Composition par m³ de béton | 730 kg exemple 2 310 litres d'eau | 250 kg exemple 1 250 litres d'eau |
|---|---|---|
| Rapport eau / ciment | 0,73 | 0,43 |
| Densité du béton sec | 1160 kg / m³ | 420 kg / m³ |
| Maniabilité du béton | Béton fluide | Béton fluide |
| Aspect du béton | Compact | Quasi-poreux |
| Résistance à la compression à 7 jours | 4.5 MPa | / |
| Résistance à la compression à 28 jours | 7.0 MPa | 1 MPa |

La résistance à la compression est mesurée selon la norme EN-206-1.

## Revendications

1. Composition sèche comprenant :
- des granulats de densité comprise entre 0,08 kg/L et 0,12 kg/L et de Dₘₐₓ inférieur ou égal à 6 mm ;
- du ciment ; et
- un copolymère bloc de poly(oxyde d'éthylène) et de poly(oxyde de propylène).

2. Composition sèche selon la revendication 1, dans laquelle les granulats sont choisis dans le groupe comprenant les schistes et argiles expansés, ponces, pouzzolanes, perlites et vermiculite, polystyrènes expansés, copeaux de bois et lièges.

3. Composition sèche selon la revendication 1 ou 2, dans laquelle les granulats sont de la perlite expansée.

4. Composition sèche selon l'une des revendications 1 à 3, dans laquelle le ciment est un ciment de type CEM 32.5 N ou R.

5. Composition sèche selon l'une des revendications 1 à 4, dans laquelle :
- le rapport de la masse de ciment sur la masse de granulats est compris entre 0,9 et 1,2, de préférence entre 1 et 1,1 ; et
- le rapport de la masse de copolymère bloc de poly(oxyde d'éthylène) et de poly(oxyde de propylène) sur la masse de granulats est compris entre 0,5×10⁻³ et 4×10⁻³, de préférence entre 1,5×10⁻³ et 2×10⁻³.

6. Composition sèche selon l'une des revendications 1 à 4, comprenant en outre :
- du sable ;
- un agent tensioactif ; et
- un agent anti-ségrégateur.

7. Composition sèche selon la revendication 6, dans laquelle le sable est un sable roulé constitué de grains de taille comprise entre 0 et 4 mm.

8. Composition sèche selon la revendication 6 ou 7, dans laquelle l'agent tensioactif est un polynaphtalène sulfonate de sodium.

9. Composition sèche selon l'une des revendications 6 à 8, dans laquelle l'agent anti-ségrégateur est la méthylhydroxypropylcellulose.

10. Composition sèche selon l'une des revendications 6 à 9, dans laquelle :
- le rapport de la masse de ciment sur la masse de granulats est compris entre 4,5 et 7, de préférence entre 5,4 et 6 ;
- le rapport de la masse de sable sur la masse de granulats est compris entre 2 et 5, de préférence entre 3 et 4 ;
- le rapport de la masse d'agent tensioactif sur la masse de granulats est compris entre 5×10⁻³ et 25×10⁻³, de préférence entre 8×10⁻³ et 16x 10⁻³ ;
- le rapport de la masse de copolymère bloc de poly(oxyde d'éthylène) et de poly(oxyde de propylène) sur la masse de granulats est compris entre 3× 10⁻³ et 10×10⁻³, de préférence entre 4,5×10⁻³ et 6,5×10⁻³ ; et
- le rapport de la masse d'agent anti-ségrégateur sur la masse de granulats est compris entre 0,2× 10⁻³ et 2× 10⁻³, de préférence entre 0,5×10⁻³ et 1×10⁻³.

11. Composition de béton humide, comprenant :
- la composition sèche selon l'une des revendications 1 à 10 ; gâchée avec
- de l'eau.

12. Utilisation de la composition sèche selon l'une des revendications 1 à 10 ou de la composition de béton humide selon la revendication 11 pour la rénovation de plancher ou la fabrication de sous-chape.

13. Procédé de fabrication d'une composition sèche comprenant :
- des granulats de densité comprise entre 0,08 kg/L et 0,12 kg/L et de Dₘₐₓ inférieur ou égal à 6 mm ;
- du ciment ; et
- un copolymère bloc de poly(oxyde d'éthylène) et de poly(oxyde de propylène) ;
dans lequel le procédé comprend une étape de mélange des composants de la composition sèche.

14. Procédé selon la revendication 13, dans lequel la composition sèche est selon l'une des revendications 1 à 10.

15. Procédé selon la revendication 13 ou 14, dans lequel l'étape de mélange est effectuée au moyen d'un mélangeur (1) comprenant :
- une cuve de mélange (11) en forme de cône à axe vertical ;
- un dispositif (12) permettant de réaliser une rotation de la cuve ;
- une vis de mélange tangente au cône (14) et fixée sur un châssis fixe (13) permettant d'effectuer le mélange ;
- une vis de mélange à coeur (15) permettant d'optimiser ce mélange.

16. Procédé selon la revendication 15, dans lequel on introduit dans le mélangeur, dans l'ordre :
- les granulats ; puis
- le ciment ; puis
- éventuellement le sable ; puis
- les autres composés.

## Claims

1. A dry composition comprising:
- granulates with a density comprised between 0.08 kg/L and 0.12 kg/L and with Dₘₐₓ less than or equal to 6 mm;
- cement; and
- a block copolymer of poly(ethylene oxide) and poly(propylene oxide).

2. The dry composition according to claim 1, wherein the granulates are selected from the group comprising expanded shales and clays, pumices, puzzolanas, perlites and vermiculite, expanded polystyrenes, wood chips and corks.

3. The dry composition according to claim 1 or 2, wherein the granulates are expanded perlite.

4. The dry composition according to any of claims 1 to 3, wherein the cement is a cement of the CEM 32.5 N or R type.

5. The dry composition according to any of claims 1 to 4, wherein:
- the ratio of the cement mass to the mass of granulates is comprised between 0.9 and 1.2, preferably between 1 and 1.1; and
- the ratio of the poly(ethylene oxide) and poly(propylene oxide) block copolymer mass to the mass of the granulates is comprised between 0.5x10⁻³ and 4x10⁻³, preferably between 1.5 x 10⁻³ and 2 x 10⁻³.

6. The dry composition according to any of claims 1 to 4, further comprising:
- sand;
- a surfactant; and
- an anti-segregation agent.

7. The dry composition according to claim 6, wherein the sand is rolled sand consisting of grains with a size comprised between 0 and 4 mm.

8. The dry composition according to claim 6 or 7, wherein the surfactant is sodium polynaphthalene sulfonate.

9. The dry composition according to any of claims 6 to 8, wherein the anti-segregation agent is methylhydroxypropyl cellulose.

10. The dry composition according to any of claims 6 to 9, wherein:
- the ratio of the cement mass to the mass of granulates is comprised between 4.5 and 7, preferably between 5.4 and 6;
- the ratio of the sand mass to the mass of granulates is comprised between 2 and 5, preferably between 3 and 4;
- the ratio of the surfactant mass to the mass of granulates is comprised between 5 x 10⁻³ and 25 x 10⁻³, preferably between 8 x 10⁻³ and 16 x 10⁻³;
- the ratio of the mass of poly(ethylene oxide) and poly(propylene oxide) block copolymer to the mass of granulates is comprised between 3 x 10-³ and 10 x 10⁻³, preferably between 4.5 x 10⁻³ and 6.5 x 10⁻³; and
- the ratio of the anti-segregation agent mass to the mass of granulates is comprised between 0.2 x 10⁻³ and 2 x 10⁻³, preferably between 0.5 x 10⁻³ and 1 x 10⁻³.

11. A wet concrete composition, comprising:
- the dry composition according to any of claims 1 to 10; mixed with
- water.

12. The use of the dry composition according to any of claims 1 to 10 or of the wet concrete composition according to claim 11 for floor renovation or for making an under-screed.

13. A method for making a dry composition comprising:
- granulates of a density comprised between 0.08 kg/L and 0.12 kg/L and of Dₘₐₓ of less than or equal to 6 mm;
- cement; and
- a block copolymer of poly(ethylene oxide) and of poly(propylene oxide);
wherein the method comprises a step of mixing the components of the dry composition.

14. The method according to claim 13, wherein the dry composition is according to any of claims 1 to 10.

15. The method according to claim 13 or 14, wherein the mixing step is carried out by means of a mixer (1) comprising:
- a cone-shaped mixing tank (11) with a vertical axis;
- a device (12) for achieving rotation of the tank;
- a mixing screw tangent to the cone (14) and attached on a fixed underframe (13), allowing the performance of this mixing;
- a bulk mixing screw (15), allowing the optimization of this mixing.

16. The method according to claim 15, wherein:
- the granulates; and then
- the cement; and then
- optionally sand; and then
- the other components,
are introduced into the mixer in this order.

## Patentansprüche

1. Trockene Zusammensetzung umfassend:
- Granulate mit einer Dichte von 0,08 kg/ℓ und 0,12 kg/ℓ und einem Dₘₐₓ von höchstens 6 mm;
- Zement; und
- ein Blockcopolymer aus Polyethylenglykol und Polypropylenglykol

2. Trockene Zusammensetzung nach Anspruch 1, wobei die Granulate aus der Gruppe gewählt sind, expandierter Schiefer und Tone, Bimssteine, Puzzolane, Perlite und Vermiculit, expandierte Polystyrole, Sägespänne und Kork umfasst.

3. Trockene Zusammensetzung nach Anspruch 1 oder 2, wobei es sich bei den Granulaten um expandiertes Perlit handelt.

4. Trockene Zusammensetzung nach einem der Ansprüche 1 bis 3, wobei der Zement ein Zement des Typs CEM 32.5 N oder R ist.

5. Zusammensetzung nach einem der Ansprüche 1 bis 4, wobei:
- das Verhältnis der Zementmasse zur Masse der Granulate 0,9 bis 1,2, vorzugsweise 1 bis 1,1, beträgt; und
- das Verhältnis der Masse des Blockcopolymers aus Polyethylenglykol und aus Polypropylenglykol zur Masse der Granulate 0,5 x 10⁻³ bis 4 x 10⁻³, vorzugsweise 1,5 x 10⁻³ bis 2 x 10⁻³ beträgt.

6. Zusammensetzung nach einem der Ansprüche 1 bis 4, darüber hinaus umfassend:
- Sand;
- ein Tensid; und
- ein Anti-Entmischungsmittel.

7. Trockene Zusammensetzung nach Anspruch 6, wobei es sich bei dem Sand um einen Flusssand handelt, der aus Körnern einer Größe von 0 bis 4 mm besteht.

8. Trockene Zusammensetzung nach Anspruch 6 oder 7, wobei es sich bei dem Tensid um ein Natriumpolynaphthalinsulfonat handelt.

9. Trockene Zusammensetzung nach einem der Ansprüche 6 bis 8, wobei es sich bei dem Anti-Entmischungsmittel um Methylhydroxypropylcellulose handelt.

10. Zusammensetzung nach einem der Ansprüche 6 bis 9, wobei:
- das Verhältnis der Zementmasse zur Masse der Granulate 4,5 bis 7, vorzugsweise 5,4 bis 6, beträgt;
- das Verhältnis der Sandmasse zur Masse der Granulate 2 bis 5, vorzugsweise 3 bis 4, beträgt;
- das Verhältnis der Tensidmasse zur Masse der Granulate 5 x 10⁻³ bis 25 x 10⁻³, vorzugsweise 8 x 10⁻³ bis 16 x 10⁻³, beträgt;
- das Verhältnis der Masse des Blockcopolymers aus Polyethylenglykol und aus Polypropylenglykol zur Masse der Granulate 3 x 10⁻³ bis 10 x 10⁻³, vorzugsweise 4,5 x 10⁻³ bis 6,5 x 10⁻³, beträgt; und
- das Verhältnis der Masse des Anti-Entmischungsmittels zur Masse der Granulate 0,2 x 10⁻³ bis 2 x 10⁻³, vorzugsweise 0,5 x 10⁻³ bis 1 x 10⁻³, beträgt.

11. Feuchte Betonzusammensetzung, umfassend:
- die Zusammensetzung nach einem der Ansprüche 1 bis 10; angerührt mit
- Wasser.

12. Verwendung der trockenen Zusammensetzung nach einem der Ansprüche 1 bis 10 oder der feuchten Betonzusammensetzung nach Anspruch 11 für die Fußbodenrenovierung oder die Estrichgrundlagenherstellung.

13. Verfahren zur Herstellung einer trockenen Zusammensetzung umfassend:
- Granulate mit einer Dichte von 0,08 kg/ℓ und 0,12 kg/ℓ und einem Dₘₐₓ von höchstens 6 mm;
- Zement; und
- ein Blockcopolymer aus Polyethylenglykol und Polypropylenglykol;
wobei das Verfahren einen Schritt des Mischens der Bestandteile der trockenen Zusammensetzung umfasst.

14. Verfahren nach Anspruch 13, wobei die trockene Zusammensetzung einem der Ansprüche 1 bis 10 entspricht.

15. Verfahren nach Anspruch 13 oder 14, wobei der Schritt des Mischens mittels einer Mischvorrichtung (1) durchgeführt wird, die folgendes umfasst:
- einen Mischkessel (11) in Form eines Kegels mit vertikaler Achse;
- eine Vorrichtung (12), die es ermöglicht, den Kessel zu drehen;
- eine Mischschnecke, die entlang des Kegels geführt ist (14) und an einem festen Rahmen (13) befestigt ist, wobei sie es ermöglicht, den Mischvorgang durchzuführen;
- eine im Kernbereich angeordnete Mischschnecke (15), die es ermöglicht, diese Mischung zu optimieren.

16. Verfahren nach Anspruch 15, wobei der Reihe nach Folgendes in die Mischvorrichtung gegeben wird:
- die Granulate; anschließend
- der Zement; anschließend
- möglicherweise der Sand; anschließend
- die übrigen Verbindungen.
